# FASCICULE DE BREVET EUROPEEN

(11) **EP 3 197 756 B1**
(45) Date de publication et mention de la délivrance du brevet: **03.07.2019**
(21) Numéro de dépôt: 15775779.0
(22) Date de dépôt: 22.09.2015
(51) Int. Cl.: B62D 25/20, B62D 63/02

(54) **SOUBASSEMENT GERANT UNE MIXITE ENTRE UN MOTEUR ELECTRIQUE ET UN MOTEUR THERMIQUE**
UNTERBODEN ZUR GEMEINSAMEN INSTALLATION EINES ELEKTROMOTORS UND EINER WÄRMEKRAFTMASCHINE
UNDERBODY FOR THE CO-INSTALLATION OF AN ELECTRIC ENGINE AND A HEAT ENGINE

(30) Priorité: 24.09.2014 FR 1458988
(43) Date de publication de la demande: 02.08.2017
(73) Titulaire: Renault S.A.S., 92100 Boulogne-Billancourt (FR)
(72) Inventeur: HLUBINA, Thierry, F-CHAVILLE 92372 (FR); GAUMONT, Herve, F-VELIZY 78140 (FR)
(86) Numéro de dépôt international: PCT/FR2015/052540
(87) Numéro de publication internationale: WO 2016/046491

(56) Documents cités:
- EP-A1- 2 441 653
- DE-A1- 10 154 353
- DE-A1-102011 012 496

## Description

### Domaine technique de l'invention

L'invention concerne une partie centrale de soubassement de caisse structurelle de véhicule automobile, destinée à délimiter la partie inférieure d'un habitacle du véhicule et à être interposée entre des parties structurelles avant et arrière.

L'invention a pour objet également une caisse structurelle de véhicule automobile comprenant une telle partie centrale de soubassement.

### État de la technique

Actuellement, les soubassements de caisse de véhicule automobile sont dédiés à une motorisation donnée choisie parmi le thermique ou l'électrique. Pour une même plate-forme d'un véhicule, il faut donc concevoir et fabriquer un soubassement associé à la motorisation thermique et un autre soubassement, différent, associé à la motorisation électrique.

Pour les moteurs thermiques implantés dans une unité structurelle avant de la caisse, le réservoir de carburant est implanté sous le plancher de l'unité structurelle arrière. Le plancher de la partie centrale de soubassement est un plancher situé à une hauteur telle qu'il s'étend en dessous des bavolets qui bordent les bords longitudinaux de la partie centrale.

Pour les véhicules électriques par contre, les soubassements sont dédiés uniquement à ce type de motorisation et ne peuvent pas être utilisés dans le cadre d'une motorisation thermique. Notamment, la partie centrale de soubassement comprend un plancher agencé en deux zones à deux hauteurs différentes : une zone arrière haute qui permet de ménager un volume sous le plancher pour recevoir une batterie de stockage d'énergie électrique destinée à alimenter en électricité le moteur thermique d'entraînement et une zone avant basse qui délimite, du côté de l'habitacle, un volume adapté à la réception des pieds des occupants du véhicule.

Cette problématique de devoir constituer une paire de soubassements respectivement dédiés à la motorisation thermique et à la motorisation électrique envisagée sur une même plateforme, se répercute pour chaque longueur recherchée de véhicule : il est nécessaire de constituer autant de telles paires de soubassements que de longueurs recherchées du véhicule pour une même plateforme, par exemple une telle paire dans le cas d'un véhicule à deux places assises et une autre telle paire dans le cas d'un véhicule à quatre places assises.

Le document DE 101 54 353 A1 décrit une gamme d'au moins deux types différents de véhicule automobiles selon le préambule de la revendication 1.

### Objet de l'invention

Le but de la présente invention est de proposer une gamme d'au moins deux types différents de véhicules automobile ayant une partie centrale de soubassement de caisse structurelle de véhicule automobile qui remédie aux inconvénients listés ci-dessus.

Notamment, un objet de l'invention est de fournir une telle partie centrale de soubassement et une caisse structurelle qui permettent de gérer une mixité entre la motorisation électrique et la motorisation thermique pour une même plate-forme et qui facilite l'adaptation en longueur du véhicule, en limitant la simplicité, les coûts et la flexibilité.

Cet objet peut être atteint grâce à une gamme d'au moins deux types différents de véhicule automobiles comprenant chacun une caisse structurelle comprenant une partie centrale de soubassement délimitant la partie inférieure de l'habitacle de chaque type de véhicule, le véhicule du premier type étant pourvu d'un moteur thermique d'entraînement du véhicule monté sur une partie structurelle arrière de la caisse structurelle, tandis que le véhicule du deuxième type est pourvu d'un moteur électrique d'entraînement du véhicule monté sur la partie structurelle arrière de la caisse structurelle, caractérisé en ce que la partie centrale de soubassement comprend :
- un ensemble de premiers éléments d'interface permettant le montage sur la partie centrale de soubassement de composants d'un premier type associés au véhicule du premier type,
- et un ensemble de deuxièmes éléments d'interface permettant le montage sur la partie centrale de soubassement de composants d'un deuxième type associés au véhicule du deuxième type,
un bord arrière de la partie centrale de soubassement du premier type et un bord arrière de la partie centrale de soubassement du deuxième type étant équipés d'un même élément d'interface pour le raccordement à la partie structurelle arrière de la caisse structurelle,
l'ensemble de premiers éléments d'interface étant agencés dans une première zone de la partie centrale de soubassement selon la direction longitudinale et l'ensemble de deuxièmes éléments d'interface étant agencés dans une deuxième zone de la partie centrale de soubassement selon la direction longitudinale, les première et deuxième zones étant distinctes.

Selon d'autres caractéristiques avantageuses de l'invention, considérées isolément ou en combinaison :
- l'ensemble de premiers éléments d'interface et l'ensemble de deuxièmes éléments d'interface sont agencés dans une même zone de la partie centrale de soubassement selon une direction longitudinale du véhicule ;
- la longueur de la partie centrale de soubassement selon la direction longitudinale est configurée de sorte que la partie centrale de soubassement permet de recevoir deux places assises décalées selon une direction latérale du véhicule, la partie centrale de soubassement constituant un premier type de partie centrale de soubassement ;
- la longueur de la partie centrale de soubassement selon la direction longitudinale est configurée de sorte que la partie centrale de soubassement permet de recevoir quatre places assises réparties en deux rangs décalés dans la direction longitudinale et incluant chacun deux places assises décalées selon la direction latérale du véhicule, la partie centrale de soubassement constituant un deuxième type de partie centrale de soubassement, notamment configuré de sorte à inclure la partie centrale de soubassement du premier type ;

- les première et deuxième zones sont décalées entre elles suivant la direction longitudinale et constituées respectivement par une zone arrière de la partie centrale de soubassement et par une zone avant de la partie centrale de soubassement ;
- l'ensemble de premiers éléments d'interface comprennent des éléments permettant de monter, sous un plancher de la partie centrale de soubassement, un réservoir de stockage d'un carburant destiné à alimenter le moteur thermique d'entraînement et les organes associés au fonctionnement dudit réservoir et en ce que l'ensemble de deuxièmes éléments d'interface comprennent des éléments permettant de monter, sous le plancher de la partie centrale de soubassement, une batterie de stockage de l'énergie électrique destinée à alimenter le moteur électrique d'entraînement et les organes associés au fonctionnement de ladite batterie ;
- le long de chacun de ses bords longitudinaux, la partie centrale de soubassement comprend un bavolet et en ce que le plancher de la partie centrale de soubassement est monté en partie haute du bavolet de sorte à ménager un espace sous le plancher, du côté opposé à l'habitacle suivant une direction verticale, ledit espace pouvant indifféremment loger soit ledit réservoir soit la batterie ;

L'invention a également pour objet une caisse structurelle de véhicule automobile, comprenant une partie centrale de soubassement d'une gamme d'au moins deux types différents de véhicules automobiles ayant tout ou partie des caractéristiques précédentes, et une partie structurelle arrière solidaire du bord arrière de la partie centrale de soubassement, la partie structurelle arrière portant indifféremment soit le moteur thermique d'entraînement associé aux composants montés sur la partie centrale de soubassement via l'ensemble de premiers éléments d'interface ou soit le moteur électrique d'entraînement associé aux composants montés sur la partie centrale de soubassement via l'ensemble de deuxièmes éléments d'interface.

Selon d'autres caractéristiques avantageuses de l'invention :
- la caisse structurelle comprend une partie structurelle avant incluant au moins un longeron avant, l'ensemble étant agencé de sorte que la partie centrale de soubassement est interposée entre la partie structurelle avant et la partie structurelle arrière selon la direction longitudinale, et en ce que la caisse structurelle comprend au moins une pièce de structure assurant une reprise d'efforts et/ou une transmission d'efforts d'une part entre le longeron avant et au moins un bavolet agencé le long d'un bord longitudinal de la partie centrale de soubassement, d'autre part entre le longeron avant et un tunnel longitudinal de structure de la partie centrale de soubassement centré dans la largeur de la partie centrale de soubassement.
- le tunnel longitudinal de structure est délimité par une pièce en forme de profilé rapportée sur le plancher de la partie centrale de soubassement de sorte à être orientée dans la direction longitudinale et à délimiter, en combinaison avec le plancher, un corps creux de renfort de forme tubulaire, ayant une section présentant un contour fermé, disposé au-dessus du plancher.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective illustrant un éclaté d'une partie d'un véhicule automobile équipée d'une partie centrale de soubassement selon l'invention,
- la figure 2 est une vue de dessus de la caisse structurelle dans le cas d'une motorisation thermique, équipée du premier type de partie centrale de soubassement,
- la figure 3 est une vue de dessus de la caisse structurelle dans le cas d'une motorisation électrique, équipée du deuxième type de partie centrale de soubassement,
- la figure 4 est une vue de dessus de la caisse structurelle dans le cas d'une motorisation thermique, équipée du premier type de partie centrale de soubassement,
- la figure 5 est une vue de dessus de la caisse structurelle dans le cas d'une motorisation électrique, équipée du deuxième type de partie centrale de soubassement,
- les figures 6 et 7 illustrent en vue de dessus les parties centrales de soubassement respectivement du premier type et du deuxième type,
- la figure 8 est une vue en coupe selon un plan de coupe latéral-vertical d'une zone de la partie centrale de soubassement située à proximité d'un bavolet, et
- la figure 9 est une vue en perspective avant d'une caisse structurelle équipée d'une partie centrale de soubassement selon l'invention.

### Description de modes préférentiels de l'invention

La description qui va suivre est faite en référence à un repère orthonormé (X, Y, Z) associé classiquement à un véhicule automobile, dans lequel X est la direction longitudinale horizontale avant-arrière du véhicule, Y est la direction transversale droite-gauche qui est horizontale et perpendiculaire à X, et Z est la direction verticale conjointement perpendiculaire aux directions X et Y. Ces directions peuvent être considérées comme liées à la caisse structurelle du véhicule et donc aussi au véhicule automobile.

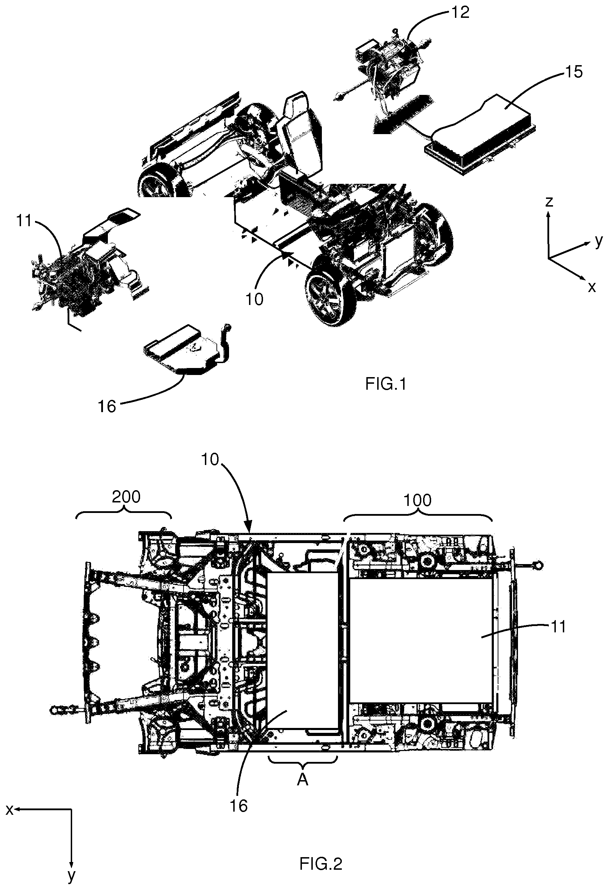

La partie centrale de soubassement 10 de caisse structurelle de véhicule automobile, notamment visible sur les figures 2 à 7 et destinée à délimiter la partie inférieure d'un habitacle du véhicule, comprend :
- un ensemble de premiers éléments d'interface permettant le montage sur la partie centrale de soubassement 10 de composants d'un premier type associés au fonctionnement d'un moteur thermique d'entraînement 11 du véhicule destiné à être monté sur une partie structurelle arrière 100 de la caisse structurelle solidaire de la partie centrale de soubassement 10,
- et un ensemble de deuxièmes éléments d'interface permettant le montage sur la partie centrale de soubassement 10 de composants d'un deuxième type associés au fonctionnement d'un moteur électrique d'entraînement 12 du véhicule destiné à être monté sur ladite partie structurelle arrière 100.

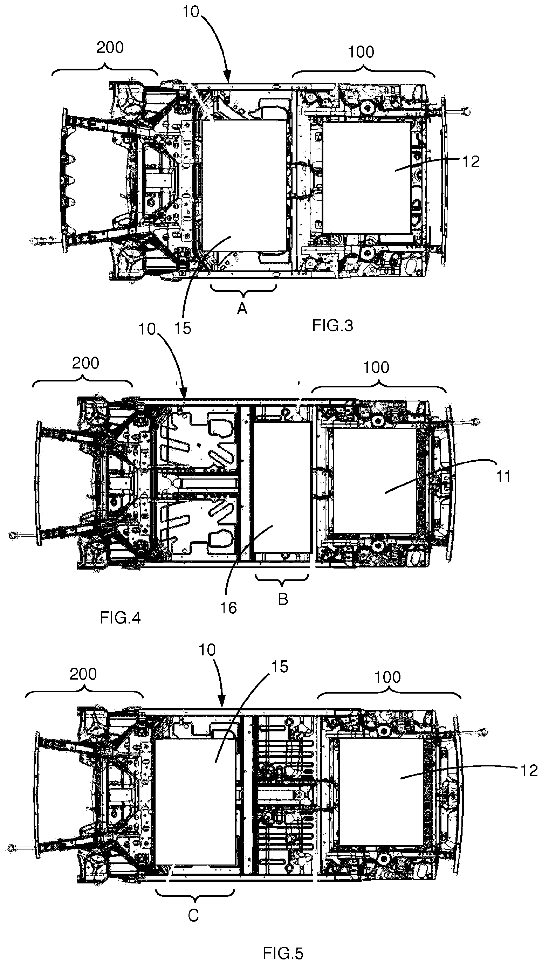

En référence aux figures 2 et 3 qui concernent un premier type de partie centrale de soubassement 10 défini plus loin, l'ensemble de premiers éléments d'interface et l'ensemble de deuxièmes éléments d'interface peuvent, dans cette variante, être agencés dans une même zone unique de la partie centrale de soubassement 10 selon la direction longitudinale X. Cette zone unique est repérée A sur les figures 2 et 3.

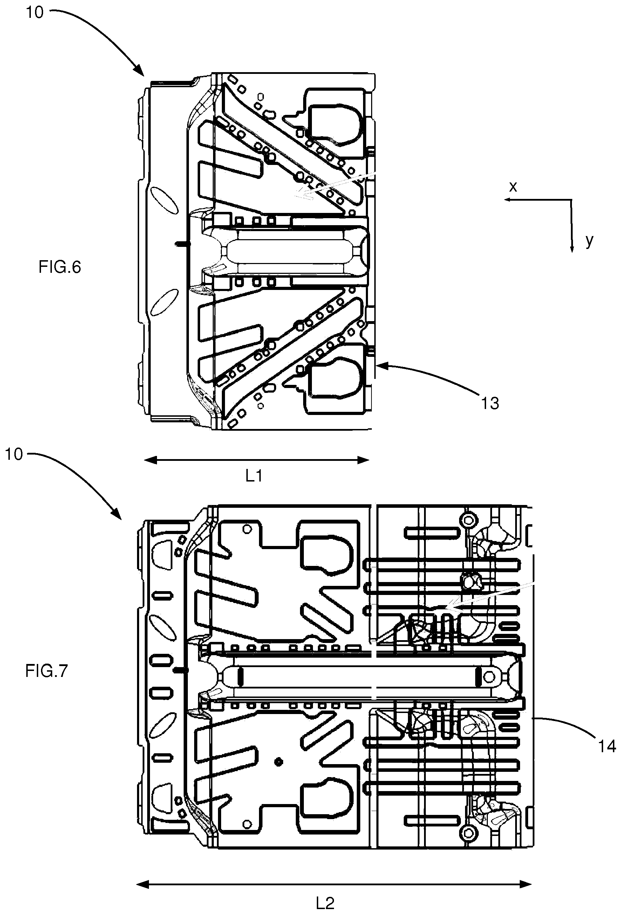

Pour constituer le premier type de partie centrale de soubassement 10, la longueur L1 (figure 6) de la partie centrale de soubassement 10 selon la direction longitudinale X est de préférence configurée de sorte que la partie centrale de soubassement 10 permet de recevoir deux places assises décalées entre elles selon la direction latérale Y.

En référence maintenant aux figures 4 et 5 qui concernent un deuxième type de partie centrale de soubassement 10 défini plus loin, l'ensemble de premiers éléments d'interface sont agencés dans une première zone B de la partie centrale de soubassement 10 selon la direction longitudinale X et l'ensemble de deuxièmes éléments d'interface sont agencés dans une deuxième zone C de la partie centrale de soubassement 10 selon la direction longitudinale X, les première et deuxième zones B et C étant distinctes.

Dans ce qui précède, que ce soit pour la zone unique A évoquée pour le premier type de partie centrale de soubassement 10 et pour les première et deuxième zones B et C évoquées pour le deuxième type de partie centrale de soubassement, une « zone » s'entend de préférence comme une partie de la partie centrale de soubassement 10 délimitée sur une fraction de la longueur de la partie centrale 10 selon la direction longitudinale X et dans le même temps sur la totalité de la largeur de la partie centrale 10 selon la direction latérale Y.

Pour constituer le deuxième type de partie centrale de soubassement 10, la longueur L2 (figure 7) de la partie centrale de soubassement 10 selon la direction longitudinale X est de préférence configurée de sorte que la partie centrale de soubassement 10 permet de recevoir quatre places assises réparties en deux rangs décalés entre eux selon la direction longitudinale X et incluant chacun deux places assises décalées entre elles selon la direction latérale Y du véhicule.

De préférence, le deuxième type de partie centrale de soubassement 10 est configuré de sorte à inclure la partie centrale de soubassement 10 du premier type. Notamment, c'est la fraction avant (suivant la direction longitudinale X) de la partie centrale 10 du deuxième type qui est identique à la partie centrale 10 du premier type, la partie centrale de deuxième type incluant en complément une fraction arrière supplémentaire. Ces fractions arrière et avant sont d'un seul tenant pour finalement constituer une partie centrale du deuxième type monobloc. Au sein d'une caisse structurelle incluant une partie centrale de soubassement selon le deuxième type, cette fraction supplémentaire arrière assure le raccordement et la cohésion, pour les transmissions et encaissement d'efforts d'une partie à l'autre, entre la partie centrale de soubassement 10 selon le premier type et la partie structurelle arrière 100.

La solution décrite ici permet de prendre en compte, pour la partie centrale de soubassement 10 d'une même plateforme de véhicule, les contraintes liées à la motorisation thermique et à la motorisation électrique pour un véhicule qui soit indifféremment de type à 2 places ou à 4 places. Autrement dit, chaque partie centrale de soubassement décrite ici permet d'être indifféremment utilisée sélectivement dans le cadre d'une utilisation mettant en oeuvre une motorisation thermique via le moteur thermique 11 et dans le cadre d'une utilisation mettant en oeuvre une motorisation électrique via le moteur électrique 12. La conception de la partie centrale de soubassement de la plateforme concernée permet de recevoir l'ensemble des interfaces des composants pour le moteur thermique (principalement le réservoir de carburant et les organes associés) ainsi que l'ensemble des composants pour le moteur électrique (principalement la batterie et les organes associés). De plus, la mise à longueur du plancher central, entre la longueur L1 et L2, permet de passer d'une plateforme pour véhicule à 4 places à un véhicule à 2 places ou réciproquement. Une même plateforme permet d'être adaptée et de prendre en compte la diversité entre la configuration à deux places et la configuration à quatre places ainsi que le type de motorisation entre la nature électrique et la nature thermique.

Selon un mode de réalisation, le bord arrière 13 de la partie centrale de soubassement 10 du premier type et le bord arrière 14 de la partie centrale de soubassement du deuxième type sont équipés d'un même élément d'interface pour le raccordement à la partie structurelle arrière 100 de la caisse structurelle. Autrement dit, l'élément d'interface du bord arrière 13 du premier type de partie centrale de soubassement 10 assurant le raccordement à la partie arrière 100 de la caisse structurelle et l'élément d'interface du bord arrière 14 du deuxième type de partie centrale de soubassement 10 assurant le raccordement à la partie arrière 100 de la caisse structurelle sont identiques.

De la manière illustrée sur les figures 4 et 5, la première zone B et la deuxième zone C sont décalées entre elles suivant la direction longitudinale X et constituées respectivement par une zone arrière de la partie centrale de soubassement 10 et par une zone avant de la partie centrale de soubassement 10, vu selon la direction longitudinale X.

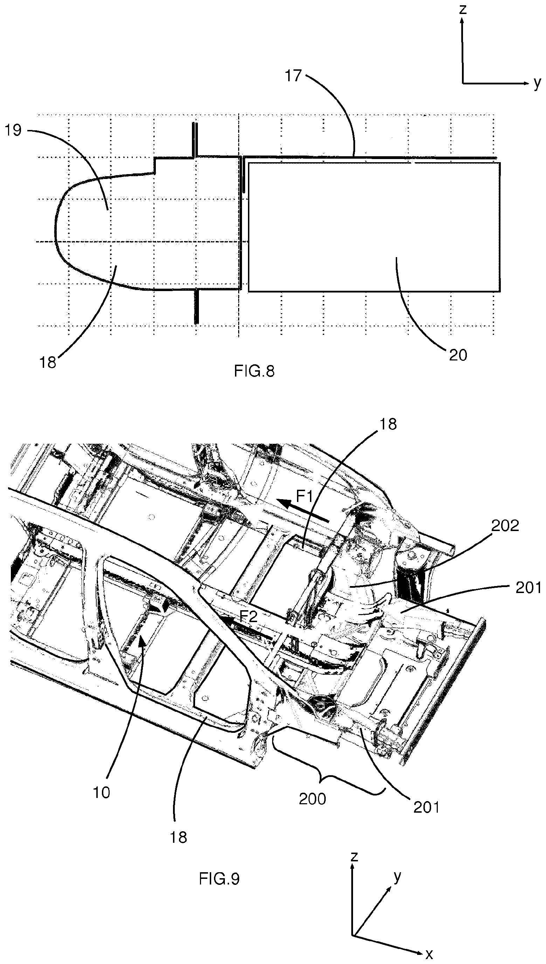

L'ensemble de premiers éléments d'interface comprennent des éléments permettant de monter, sous un plancher 17 (figure 8) de la partie centrale de soubassement 10, un réservoir 16 de stockage d'un carburant destiné à alimenter le moteur thermique d'entraînement 11 et les organes associés au fonctionnement dudit réservoir 16 et du moteur thermique 11. L'ensemble de deuxièmes éléments d'interface comprennent des éléments permettant de monter, sous le plancher 17 de la partie centrale de soubassement 10, une batterie 15 de stockage de l'énergie électrique destinée à alimenter le moteur électrique d'entraînement 12 et les organes associés au fonctionnement de ladite batterie 15 et du moteur électrique 12.

Dans le deuxième type de partie centrale 10, la batterie 15 de stockage d'électricité destinée à alimenter le moteur électrique d'entraînement 12 dans la version électrique n'est donc pas montée dans la zone destinée à recevoir le réservoir 16 à carburant de la version thermique. L'espace laissé libre par le réservoir 16 dans la première zone B lorsque la motorisation électrique est utilisée est vacant. Cet espace est dimensionné et structuré pour absorber l'énergie transmise lors de différents chocs (frontaux, arrière et poteau), sans se déformer afin de respecter les critères d'intégrité structurelle.

Le long de chacun de ses bords longitudinaux, la partie centrale de soubassement comprend un bavolet 18 (figures 8 et 9). De préférence, la partie centrale de soubassement 10 comprend donc ce bavolet 18 qui est un élément structurel allongé, orienté selon la direction longitudinale X, qui appartient à la caisse structurelle et est implanté au niveau de l'un des bords longitudinaux droit ou gauche du soubassement. Le bavolet 18 peut se présenter sous la forme d'un corps creux de renfort, de forme tubulaire de section à contour fermé orienté suivant la direction longitudinale X. Le bavolet 18 délimite une cavité 19 tubulaire. Le plancher 17 de la partie centrale de soubassement 10 est monté en partie haute du bavolet 18 de sorte à ménager un espace 20 sous le plancher 17, du côté opposé à l'habitacle suivant la direction verticale Z, ledit espace 20 pouvant indifféremment loger soit ledit réservoir 16 de stockage de carburant soit la batterie 15.

La caisse structurelle de véhicule automobile, illustrée par exemple sur la figure 9, comprend une partie centrale de soubassement 10 décrite précédemment et une partie structurelle arrière 100 solidaire du bord arrière 13, 14 de la partie centrale de soubassement 10, la partie structurelle arrière 100 portant indifféremment soit le moteur thermique d'entraînement 11 associé aux composants montés sur la partie centrale de soubassement 10 via l'ensemble de premiers éléments d'interface ou soit le moteur électrique d'entraînement 12 associé aux composants montés sur la partie centrale de soubassement 10 via l'ensemble de deuxièmes éléments d'interface. Autrement dit, la partie centrale de soubassement 10 est spécifique à chaque type de véhicule en raison d'une longueur différente et adaptée au besoin de chaque type de véhicule tandis que la partie structurelle arrière 100 est identique dans les deux types de véhicules.

La caisse structurelle comprend une partie structurelle avant 200 incluant au moins un longeron avant 201, l'ensemble étant agencé de sorte que la partie centrale de soubassement 10 est interposée entre la partie structurelle avant 200 et la partie structurelle arrière 100 selon la direction longitudinale X. La caisse structurelle comprend au moins une pièce de structure 202 assurant une reprise d'efforts et/ou une transmission d'efforts d'une part entre le longeron avant 201 et au moins l'un des bavolets 18 agencé le long d'un bord longitudinal de la partie centrale de soubassement 10, d'autre part entre le longeron avant 201 et un tunnel longitudinal de structure 21 de la partie centrale de soubassement 10 centré dans la largeur de la partie centrale de soubassement 10 et orienté suivant la direction longitudinale X.

Ladite au moins une pièce de structure 202 comprend un élément de liaison assurant une liaison entre la pièce de structure 202 et le bavolet 18 configurée de sorte à réaliser une reprise d'efforts longitudinaux par la pièce de structure 202 en provenance du bavolet 18 et/ou une transmission d'efforts longitudinaux depuis la pièce de structure 202 vers le bavolet 18, notamment en cas de choc avant ou arrière appliqué à un véhicule équipé de la partie centrale de soubassement 10. Sur la figure 9, la flèche F1 représente la transmission d'efforts longitudinaux depuis la pièce de structure 202 vers le bavolet 18 en cas de choc avant ou frontal appliqué sur la partie avant 200 d'un véhicule équipé de la partie centrale de soubassement 10.

Ladite au moins une pièce de structure 202 comprend un élément de liaison assurant une liaison entre la pièce de structure 202 et le tunnel longitudinal de structure 21 configurée de sorte à réaliser une reprise d'efforts longitudinaux par la pièce de structure 202 en provenance du tunnel longitudinal 21 et/ou une transmission d'efforts longitudinaux depuis la pièce de structure 202 vers le tunnel longitudinal 21, notamment en cas de choc avant ou arrière appliqué à un véhicule équipé de la partie centrale de soubassement. Sur la figure, la flèche F2 représente la transmission d'efforts longitudinaux depuis la pièce de structure 202 vers le tunnel longitudinal 21 en cas de choc avant ou frontal appliqué sur la partie avant 200 d'un véhicule équipé de la partie centrale de soubassement 10.

Un aménagement similaire peut être prévu de chaque côté droit et gauche de la caisse structurelle dans sa partie avant 200, à l'aide d'un longeron avant droit 201 et à l'aide d'un longeron avant gauche 201 décalés suivant la direction latérale Y, appartenant à la partie avant 200, ladite au moins une pièce de structure 202 assurant une coopération telle que précédemment définie entre les deux longerons avant 201 droit et gauche et respectivement les bavolets 18 droit et gauche. Ladite au moins une pièce de structure 202 peut notamment comporter une traverse avant reliant les extrémités arrière des deux longerons avant 201 et des pièces reliant cette traverse aux extrémités avant des deux bavolets 18 et du tunnel longitudinal 21.

Le tunnel longitudinal de structure 21 est délimité de préférence par une pièce en forme de profilé rapportée sur le plancher 17 de la partie centrale de soubassement 10 de sorte à être orientée dans la direction longitudinale X et à délimiter, en combinaison avec le plancher 17, un corps creux de renfort de forme tubulaire, ayant une section présentant un contour fermé, disposé au-dessus du plancher 17. Autrement dit, le corps creux délimité par le tunnel longitudinal 21 est disposé du côté de l'habitacle, évitant de manière très simple et à moindre coût tous les problèmes liés à la corrosion.

Par « corps creux », il est entendu de préférence le fait qu'il s'agit d'un corps délimitant une cavité ou un volume, fermé ou partiellement ouvert vers l'extérieur. La délimitation de telles cavités ou de tels volumes participe grandement à la raideur en compression, en flexion, en torsion, en cisaillement, de la partie de caisse structurelle, et permet de satisfaire les cahiers des charges fonctionnels subis classiquement par une partie de caisse.

Chaque corps creux de renfort est configuré (dimensionnement, orientation, forme de la section de coupe, organisation spatiale, etc.) de sorte à encaisser une majorité des efforts (compression, torsion, cisaillement) subis par la partie centrale de soubassement 10 en cas de choc (avant, arrière, latéral, etc.) appliqué à un véhicule équipé de cette partie 10.

Il convient aussi de préciser que le terme « de renfort » signifie de préférence que le corps creux ainsi délimité supporte la plus grande majorité, voire l'intégralité des entrées et des sorties d'efforts mécaniques subis par la partie centrale 10 concernée, en complément des bavolets 18.

## Revendications

1. Gamme d'au moins deux types différents de véhicule automobiles comprenant chacun une caisse structurelle comprenant une partie centrale de soubassement (10) délimitant la partie inférieure de l'habitacle de chaque type de véhicule, le véhicule du premier type étant pourvu d'un moteur thermique d'entraînement (11) du véhicule monté sur une partie structurelle arrière (100) de la caisse structurelle, tandis que le véhicule du deuxième type est pourvu d'un moteur électrique d'entraînement (12) du véhicule monté sur la partie structurelle arrière (100) de la caisse structurelle, la partie centrale de soubassement (10) comprenant :
- un ensemble de premiers éléments d'interface permettant le montage sur la partie centrale de soubassement (10) de composants d'un premier type associés au véhicule du premier type,
- et un ensemble de deuxièmes éléments d'interface permettant le montage sur la partie centrale de soubassement (10) de composants d'un deuxième type associés au véhicule du deuxième type,
un bord arrière (13) de la partie centrale de soubassement (10) du premier type et un bord arrière (14) de la partie centrale de soubassement (10) du deuxième type étant équipés d'un même élément d'interface pour le raccordement à la partie structurelle arrière (100) de la caisse structurelle, **caractérisé en ce que** l'ensemble de premiers éléments d'interface sont agencés dans une première zone (B) de la partie centrale de soubassement (10) selon la direction longitudinale (X) et l'ensemble de deuxièmes éléments d'interface sont agencés dans une deuxième zone (C) de la partie centrale de soubassement (10) selon la direction longitudinale (X), les première et deuxième zones (B, C) étant distinctes.

2. Gamme d'au moins deux types différents de véhicule automobiles selon la revendication 1, **caractérisée en ce que** l'ensemble de premiers éléments d'interface et l'ensemble de deuxièmes éléments d'interface sont agencés dans une même zone (A) de la partie centrale de soubassement (10) selon une direction longitudinale (X) du véhicule.

3. Gamme d'au moins deux types différents de véhicule automobiles selon revendication 2, **caractérisée en ce que** la longueur (L1) de la partie centrale de soubassement (10) selon la direction longitudinale (X) est configurée de sorte que la partie centrale de soubassement (10) permet de recevoir deux places assises décalées selon une direction latérale (Y) du véhicule, la partie centrale de soubassement (10) constituant un premier type de partie centrale de soubassement.

4. Gamme d'au moins deux types différents de véhicule automobiles selon la revendication 1, **caractérisée en ce que** la longueur (L2) de la partie centrale de soubassement (10) selon la direction longitudinale (X) est configurée de sorte que la partie centrale de soubassement (10) permet de recevoir quatre places assises réparties en deux rangs décalés dans la direction longitudinale (X) et incluant chacun deux places assises décalées selon la direction latérale (Y) du véhicule, la partie centrale de soubassement (10) constituant un deuxième type de partie centrale de soubassement, notamment configuré de sorte à inclure la partie centrale de soubassement du premier type.

5. Gamme d'au moins deux types différents de véhicule automobiles selon la revendication 1 ou 4, **caractérisée en ce que** les première et deuxième zones (B, C) sont décalées entre elles suivant la direction longitudinale (X) et constituées respectivement par une zone arrière de la partie centrale de soubassement (10) et par une zone avant de la partie centrale de soubassement (10).

6. Gamme d'au moins deux types différents de véhicule automobiles selon l'une des revendications 1 à 5, **caractérisée en ce que** l'ensemble de premiers éléments d'interface comprennent des éléments permettant de monter, sous un plancher (17) de la partie centrale de soubassement (10), un réservoir (16) de stockage d'un carburant destiné à alimenter le moteur thermique d'entraînement (11) et les organes associés au fonctionnement dudit réservoir (11) et **en ce que** l'ensemble de deuxièmes éléments d'interface comprennent des éléments permettant de monter, sous le plancher (17) de la partie centrale de soubassement (10), une batterie (15) de stockage de l'énergie électrique destinée à alimenter le moteur électrique d'entraînement (12) et les organes associés au fonctionnement de ladite batterie.

7. Gamme d'au moins deux types différents de véhicule automobiles selon la revendication 6, **caractérisée en ce que** le long de chacun de ses bords longitudinaux, la partie centrale de soubassement (10) comprend un bavolet (18) et **en ce que** le plancher (17) de la partie centrale de soubassement (10) est monté en partie haute du bavolet (18) de sorte à ménager un espace (20) sous le plancher (17), du côté opposé à l'habitacle suivant une direction verticale (Z), ledit espace (20) pouvant indifféremment loger soit ledit réservoir (16) soit la batterie (15).

8. Caisse structurelle de véhicule automobile, comprenant une partie centrale de soubassement (10) d'une gamme d'au moins deux types différents de véhicules automobiles selon l'une quelconque des revendications précédentes, et une partie structurelle arrière (100) solidaire du bord arrière (13, 14) de la partie centrale de soubassement (10), la partie structurelle arrière (100) portant indifféremment soit le moteur thermique d'entraînement (11) associé aux composants montés sur la partie centrale de soubassement (10) via l'ensemble de premiers éléments d'interface ou soit le moteur électrique d'entraînement (12) associé aux composants montés sur la partie centrale de soubassement (10) via l'ensemble de deuxièmes éléments d'interface.

9. Caisse structurelle selon la revendication 8, **caractérisée en ce qu'**elle comprend une partie structurelle avant (200) incluant au moins un longeron avant (201), l'ensemble étant agencé de sorte que la partie centrale de soubassement (10) est interposée entre la partie structurelle avant (200) et la partie structurelle arrière (100) selon la direction longitudinale (X), et **en ce que** la caisse structurelle comprend au moins une pièce de structure (202) assurant une reprise d'efforts et/ou une transmission d'efforts d'une part entre le longeron avant (201) et au moins un bavolet (18) agencé le long d'un bord longitudinal de la partie centrale de soubassement (10), d'autre part entre le longeron avant (201) et un tunnel longitudinal de structure (21) de la partie centrale de soubassement (10) centré dans la largeur de la partie centrale de soubassement (10).

10. Caisse structurelle selon la revendication 9, **caractérisé en ce que** le tunnel longitudinal de structure (21) est délimité par une pièce en forme de profilé rapportée sur le plancher (17) de la partie centrale de soubassement (10) de sorte à être orientée dans la direction longitudinale (X) et à délimiter, en combinaison avec le plancher (17), un corps creux de renfort de forme tubulaire, ayant une section présentant un contour fermé, disposé au-dessus du plancher (17).

## Patentansprüche

1. Serie von mindestens zwei verschiedenen Typen von Kraftfahrzeugen, welche jeweils eine strukturelle Karosserie aufweisen, welche einen zentralen Unterbodenabschnitt (10) aufweist, welcher den unteren Abschnitt des Fahrgastraums von jedem Fahrzeugtyp abgrenzt, wobei das Fahrzeug des ersten Typs mit einem thermischen Motor (11) zum Antrieb des Fahrzeugs vorgesehen ist, welcher an einem hinteren strukturellen Abschnitt (100) der strukturellen Karosserie montiert ist, während das Fahrzeug des zweiten Typs mit einem elektrischen Motor (12) zum Antrieb des Fahrzeugs vorgesehen ist, welcher an dem hinteren strukturellen Abschnitt (100) der strukturellen Karosserie montiert ist, wobei der zentrale Unterbodenabschnitt (10) aufweist:
- eine Baugruppe aus ersten Schnittstellenelementen, welche die Montage an dem zentralen Unterbodenabschnitt (10) von Komponenten eines ersten Typs ermöglichen, welche dem Fahrzeug des ersten Typs zugeordnet sind,
- und eine Baugruppe aus zweiten Schnittstellenelementen, welche die Montage an dem zentralen Unterbodenabschnitt (10) von Komponenten eines zweiten Typs ermöglichen, welche dem Fahrzeug des ersten Typs zugeordnet sind,
wobei ein hinterer Rand (13) des zentralen Unterbodenabschnitts (10) des ersten Typs und ein hinterer Rand (14) des zentralen Unterbodenabschnitts (10) des zweiten Typs mit einem gleichen Schnittstellenelement für die Anbindung an den hinteren strukturellen Abschnitt (100) der strukturellen Karosserie ausgerüstet sind, **dadurch gekennzeichnet, dass** die Baugruppe aus ersten Schnittstellenelementen in einer ersten Zone (B) des zentralen Unterbodenabschnitts (10) gemäß der Längsrichtung (X) angeordnet sind und die Baugruppe aus zweiten Schnittstellenelementen in einer zweiten Zone (C) des zentralen Unterbodenabschnitts (10) gemäß der Längsrichtung (X) angeordnet sind, wobei die erste und die zweite Zone (B, C) verschieden sind.

2. Serie von mindestens zwei verschiedenen Typen von Kraftfahrzeugen nach Anspruch 1, **dadurch gekennzeichnet, dass** die Baugruppe aus ersten Schnittstellenelementen und die Baugruppe aus zweiten Schnittstellenelementen in einer gleichen Zone (A) des zentralen Unterbodenabschnitts (10) gemäß einer Längsrichtung (X) des Fahrzeugs angeordnet sind.

3. Serie von mindestens zwei verschiedenen Typen von Kraftfahrzeugen nach Anspruch 2, **dadurch gekennzeichnet, dass** die Länge (L1) des zentralen Unterbodenabschnitts (10) gemäß der Längsrichtung (X) derartig ausgelegt ist, dass der zentrale Unterbodenabschnitt (10) es ermöglicht, zwei Sitzplätze, welche gemäß einer seitlichen Richtung (Y) des Fahrzeugs versetzt sind, aufzunehmen, wobei der zentrale Unterbodenabschnitt (10) einen ersten Typ eines zentralen Unterbodenabschnitts darstellt.

4. Serie von mindestens zwei verschiedenen Typen von Kraftfahrzeugen nach Anspruch 1, **dadurch gekennzeichnet, dass** die Länge (L2) des zentralen Unterbodenabschnitts (10) gemäß der Längsrichtung (X) derartig ausgelegt ist, dass der zentrale Unterbodenabschnitt (10) es ermöglicht, vier Sitzplätze, welche in zwei Reihen verteilt sind, welche in der Längsrichtung (X) versetzt sind und welche jeweils zwei gemäß einer seitlichen Richtung (Y) des Fahrzeugs versetzte Sitzplätze enthalten, aufzunehmen, wobei der zentrale Unterbodenabschnitt (10) einen zweiten Typ eines zentralen Unterbodenabschnitts darstellt, welcher insbesondere derartig ausgelegt ist, um den zentralen Unterbodenabschnitt des ersten Typs zu enthalten.

5. Serie von mindestens zwei verschiedenen Typen von Kraftfahrzeugen nach Anspruch 1 oder 4, **dadurch gekennzeichnet, dass** die erste und zweite Zone (B, C) gemäß der Längsrichtung (X) untereinander versetzt sind und jeweils von einer hinteren Zone des zentralen Unterbodenabschnitts (10) und einer vorderen Zone des zentralen Unterbodenabschnitts (10) gebildet werden.

6. Serie von mindestens zwei verschiedenen Typen von Kraftfahrzeugen nach einem der Ansprüche 1 bis 5, **dadurch gekennzeichnet, dass** die Baugruppe aus ersten Schnittstellenelementen Elemente aufweist, welche es ermöglichen, unter einem Boden (17) des zentralen Unterbodenabschnitts (10) einen Tank (16) zur Speicherung eines Kraftstoffs zu montieren, welcher dafür vorgesehen ist, den thermischen Antriebsmotor (11) und die mit der Funktion des Tanks (11) verknüpften Organe zu versorgen, und dass die Baugruppe aus zweiten Schnittstellenelementen Elemente aufweist, welches es ermöglichen, unter den Boden (17) des zentralen Unterbodenabschnitts (10) eine Batterie (15) zur Speicherung der elektrischen Energie zu montieren, welche dafür vorgesehen ist, den elektrischen Antriebsmotor (12) und die mit der Funktion der Batterie verknüpften Organe zu versorgen.

7. Serie von mindestens zwei verschiedenen Typen von Kraftfahrzeugen nach Anspruch 6, **dadurch gekennzeichnet, dass** der zentrale Unterbodenabschnitt (10) entlang jeder seiner Längsränder eine Schwelle (18) aufweist und dass der Boden (17) des zentralen Unterbodenabschnitts (10) im oberen Abschnitt der Schwelle (18) derartig montiert ist, um einen Raum (20) unter dem Boden (17) auf der gemäß einer vertikalen Richtung (Z) dem Fahrgastraum gegenüber liegenden Seite herbeizuführen, wobei der Raum (20) in gleicher Weise entweder den Tank (16) oder die Batterie (15) aufnehmen kann.

8. Strukturelle Kraftfahrzeugkarosserie, welche einen zentralen Unterbodenabschnitt (10) einer Serie von mindestens zwei verschiedenen Typen von Kraftfahrzeugen nach einem der vorhergehenden Ansprüche und einen hinteren strukturellen Abschnitt (100) aufweist, welcher fest mit dem hinteren Rand (13, 14) des zentralen Unterbodenabschnitts (10) verbunden ist, wobei der hintere strukturelle Abschnitt (100) in gleicher Weise entweder den thermischen Antriebsmotor (11), welcher über die Baugruppe aus ersten Schnittstellen mit den auf dem zentralen Unterbodenabschnitt (10) montierten Komponenten verknüpft ist, oder den elektrischen Antriebsmotor (12) trägt, welcher über die Baugruppe aus zweiten Schnittstellenelementen mit den auf dem zentralen Unterbodenabschnitt (10) montieren Komponenten verknüpft ist.

9. Strukturelle Kraftfahrzeugkarosserie nach Anspruch 8, **dadurch gekennzeichnet, dass** sie einen vorderen strukturellen Abschnitt (200) aufweist, welcher mindestens einen vorderen Längsträger (201) enthält, wobei die Baugruppe derartig angeordnet ist, dass der zentrale Unterbodenabschnitt (10) gemäß der Längsrichtung (X) zwischen dem vorderen strukturellen Abschnitt (200) und dem hinteren strukturellen Abschnitt (100) eingefügt ist, und dass die strukturelle Karosserie mindestens ein Strukturteil (202) aufweist, welches eine Aufnahme von Kräften und/oder Übertragung von Kräften einerseits zwischen dem vorderen Längsträger (201) und mindestens einer Schwelle (18), welche entlang eines Längsrands des zentralen Unterbodenabschnitts (10) angeordnet ist, und andererseits zwischen dem vorderen Längsträger (201) und einer Längstunnelstruktur (21) des zentralen Unterbodenabschnitts (10), welche über die Breite des zentralen Unterbodenabschnitts (10) zentriert ist, gewährleistet.

10. Strukturelle Kraftfahrzeugkarosserie nach Anspruch 9, **dadurch gekennzeichnet, dass** die Längstunnelstruktur (21) durch ein auf den Boden (17) des zentralen Unterbodenabschnitts (10) aufgebrachtes profiliertes Formteil derartig begrenzt wird, um in der Längsrichtung (X) ausgerichtet zu sein und um in Kombination mit dem Boden (17) einen rohrförmigen, hohlen Verstärkungskörper mit einem Querschnitt, welcher eine geschlossene Kontur aufweist, zu begrenzen, welcher über dem Boden (17) angeordnet ist.

## Claims

1. Range of at least two different types of motor vehicle each comprising a structural body comprising a central underbody part (10) delimiting the lower part of the cab of each type of vehicle, the vehicle of the first type being provided with an internal combustion drive engine (11) of the vehicle mounted on a rear structural part (100) of the structural body, while the vehicle of the second type is provided with an electric drive motor (12) of the vehicle mounted on the rear structural part (100) of the structural body, the central underbody part (10) comprising:
- a set of first interface elements allowing mounting, on the central underbody part (10), of components of a first type associated with the vehicle of the first type,
- and a set of second interface elements allowing mounting, on the central underbody part (10), of components of a second type associated with the vehicle of the second type,
a rear edge (13) of the central underbody part (10) of the first type and a rear edge (14) of the central underbody part (10) of the second type being equipped with a same interface element for connection to the rear structural part (100) of the structural body, **characterized in that** the set of first interface elements is arranged in a first zone (B) of the central underbody part (10) in the longitudinal direction (X), and the set of second interface elements is arranged in a second zone (C) of the central underbody part (10) in the longitudinal direction (X), the first and second zones (B, C) being separate.

2. Range of at least two different types of motor vehicle according to Claim 1, **characterized in that** the set of first interface elements and the set of second interface elements are arranged in a same zone (A) of the central underbody part (10) in a longitudinal direction (X) of the vehicle.

3. Range of at least two different types of motor vehicle according to Claim 2, **characterized in that** the length (L1) of the central underbody part (10) in the longitudinal direction (X) is configured such that the central underbody part (10) can receive two seats offset in a lateral direction (Y) of the vehicle, the central underbody part (10) constituting a first type of central underbody part.

4. Range of at least two different types of motor vehicle according to Claim 1, **characterized in that** the length (L2) of the central underbody part (10) in the longitudinal direction (X) is configured such that the central underbody part (10) can receive four seats distributed in two rows offset in the longitudinal direction (X) and each containing two seats offset in the lateral direction (Y) of the vehicle, the central underbody part (10) constituting a second type of central underbody part, in particular configured so as to include the central underbody part of the first type.

5. Range of at least two different types of motor vehicle according to Claim 1 or 4, **characterized in that** the first and second zones (B, C) are offset relative to each other in the longitudinal direction (X) and are constituted respectively by a rear zone of the central underbody part (10) and by a front zone of the central underbody part (10).

6. Range of at least two different types of motor vehicle according to any of Claims 1 to 5, **characterized in that** the set of first interface elements comprises elements allowing mounting, below a floor (17) of the central underbody part (10), of a fuel storage tank (16) intended to supply the internal combustion drive engine (11) and of components associated with the function of said tank (11), and **in that** the set of second interface elements comprises elements allowing mounting, below the floor (17) of the central underbody part (10), of an electrical energy storage battery (15) intended to supply the electric drive motor (12) and of components associated with the function of said battery.

7. Range of at least two different types of motor vehicle according to Claim 6, **characterized in that** along each of its longitudinal edges, the central underbody part (10) comprises an inner member (18), and **in that** the floor (17) of the central underbody part (10) is mounted at the upper part of the inner member (18) so as to provide a space (20) below the floor (17) on the side opposite the cab in a vertical direction (Z), said space (20) being able to house either said tank (16) or said battery (15).

8. Structural body of a motor vehicle comprising a central underbody part (10) of a range of at least two different types of motor vehicle according to any of the preceding claims, and a rear structural part (100) firmly attached to the rear edge (13, 14) of the central underbody part (10), the rear structural part (100) carrying either the internal combustion drive engine (11) associated with the components mounted on the central underbody part (10) via the set of first interface elements, or the electric drive motor (12) associated with the components mounted on the central underbody part (10) via the set of second interface elements.

9. Structural body according to Claim 8, **characterized in that** it comprises a front structural part (200) including at least one front side member (201), the assembly being arranged such that the central underbody part (10) is interposed between the front structural part (200) and the rear structural part (100) in the longitudinal direction (X), and **in that** the structural body comprises at least one structural piece (202) ensuring an absorption of forces and/or a transmission of forces firstly between the front side member (201) and at least one inner member (18) arranged along a longitudinal edge of the central underbody part (10), and secondly between the front side member (201) and a structural longitudinal tunnel (21) of the central underbody part (10) centered in the width of the central underbody part (10).

10. Structural body according to Claim 9, **characterized in that** the structural longitudinal tunnel (21) is delimited by a profiled piece attached to the floor (17) of the central underbody part (10) so as to be oriented in the longitudinal direction (X) and so as to delimit, in combination with the floor (17), a hollow reinforcing body of tubular form with a section of closed contour, arranged below the floor (17).
